# EUROPÄISCHE PATENTANMELDUNG

(11) **EP 0 928 053 A2**
(43) Veröffentlichungstag der Anmeldung: **07.07.1999**
(21) Anmeldenummer: 98123266.3
(22) Anmeldetag: 07.12.1998
(51) Int. Cl.: H02G 11/02, H04Q 1/14

(54) **Schalttafel**

(30) Priorität: 31.12.1997 US 1914
(71) Anmelder: KRONE Aktiengesellschaft, 14167 Berlin (DE)
(72) Erfinder: Lorscheider, Jörg, Dana Point, CA 92629 (US); Zalesky, Dean R., Denver, CO 80220 (US); Lotinsky, Peter J., Denver, CO 80231 (US)

(57) **Zusammenfassung**

Die Erfindung betrifft eine Schalttafel (8), umfassend ein Schalttafelgehäuse (10), mindestens ein erstes und zweites elektrisches Verbindungsmittel (12,14), die mittels eines elektrischen Zusammenschaltungsmittels (16) miteinander elektrisch verbunden sind, wobei das Zusammenschaltungsmittel (16) derart ausgebildet ist, daß das erste elektrische Verbindungsmittel (12) zu dem Schalttafelgehäuse (10) hin- und wegbewegbar ist.

## Beschreibung

Die Erfindung betrifft eine Schalttafel mit einem zweckmäßigen Anschlußpunkt für Telekommunikations- und Datenanwendungen gemäß dem Oberbegriff des Patentanspruchs 1.

Schalttafeln liefern eine Struktur zum Verändern von Verbindungen in Telekommunikations- und Datenanwendungen. In Anwendungen mit lokalen Netzwerken können zwischen einer Datenzentrale und einem Arbeitsplatzrechner Schalttafeln vorgesehen sein. Verbindungen können von dem Arbeitsplatzrechner zu der Schalttafel und von der Datenzentrale zu der Schalttafel verlaufen. Die Schalttafel gestattet zweckmäßige anfängliche Verbindungen sowie eine wirksame Umorientierung und Neuorganisation der Verbindungen zwischen dem Arbeitsplatzrechner und der Datenzentrale.

Es sind Schalttafeln bekannt, die eine modulare Buchsenschnittstelle bereitstellen, insbesondere mit modularen Buchsenausgängen. Die Ausgänge sind vorzugsweise mit Etiketten versehen, so daß ein Benutzer (z.B. ein Informationssystemmanager) die verschiedenen Arbeitsplatzrechnerverbindungen mit einer Netzdatenzentrale umordnen und umkonfigurieren kann. Ähnliche Anordnungen können für Telefonsysteme verwendet werden.

Jüngste Verbesserungen an Schalttafeln haben sich auf die modulare Buchsenschnittstelle konzentriert, um die elektrische Leistung der Schalttafeln zu verbessern. Dies ist insbesondere für die Herstellung einer elektrischen Verbindungsstrecke für hochratige Datenübertragungen erforderlich. Zu diesem Zweck sind Kabelsysteme (Adern) eingesetzt worden, die sich auch für die hochratige Übertragung eignen. Es sind auch Verbindungselemente (Klinkenstecker usw.) für hochratige Übertragung entwickelt worden.

Ein wichtiges Merkmal einer Schalttafelkonfiguration ist ihre Fähigkeit, ein System an Veränderungen hinsichtlich der verschiedenen elektrischen Verbindungsstrecken (wie beispielsweise Veränderungen bei Anschlüssen) anzupassen. Da die physischen Anordnungen von lokalen Netzverken oft verändert werden, besteht ein Bedarf, für verschiedene mögliche physische Verbindungen ein Kabelsystem zur Verfügung zu haben. Dies kann besonders problematisch werden, wenn neue Datenzentralen und dergleichen hinzukommen, die Kabelsysteme verschiedener unterschiedlicher Längen erfordern, die sich von der Schalttafel zu der Zentrale (oder zwischen Schalttafeln) erstrecken. Die Aufgabe, verschiedene unterschiedliche Längen von Hochleistungskabelsystemen einzukaufen und zur Verfügung zu haben, ist recht problematisch geworden und führt zu extrem hohen Kosten.

Der Erfindung liegt daher das technische Problem zugrunde, eine Schalttafel für Telekommunikations- und Datenanwendungen zu schaffen, mittels derer mit geringen Vorhaltungen eine flexible Anpassung an sich verändernde Verbindungsstrecken ermöglicht wird.

Die Lösung des technischen Problems ergibt sich durch die Merkmale des Patentanspruchs 1. Weitere vorteilhafte Ausgestaltungen der Erfindung ergeben sich aus den Unteransprüchen.

Gemäß der Erfindung wird eine Schalttafeln bereitgestellt, die folgendes umfaßt: ein Schalttafelgehäuse, ein erstes elektrisches Verbindermittel und ein zweites, mit dem Schalttafelgehäuse verbundenes elektrisches Verbindermittel und ein elektrisches Zusammenschaltungsmittel zum Verbinden des ersten elektrischen Verbindermittels und des zweiten elektrischen Verbindermittels. Das Zusammenschaltungsmittel erhält die elektrische Verbindung zwischen dem ersten elektrischen Verbindermittel und dem zweiten elektrischen Verbindermittel aufrecht, wobei es gestattet, daß das erste Verbindermittel sowohl zu dem Gehäuse hin als auch von ihm weg bewegt wird, um eine Position des ersten elektrischen Verbindermittels bezüglich des Gehäuses zu verändern. Dadurch muß die Schalttafel bei veränderter Positionierung der äußeren Vorrichtungen selbst nicht verändert werden, also insbesondere keine neuen Verbindungesleitungen benutzt werden, sondern nur das erste Verbindungsmittel zur der neuen Position bewegt werden.

In einer ersten bevorzugten Ausführungsform umfaßt das elektrische Zusammenschaltungsmittel eine elektrisch leitfähige Ader, die sich ohne Unterbrechung zwischen dem ersten Verbinder und dem zweiten Verbinder erstreckt. Mindestens eine Spule ist vorzugsweise vorgesehen, wobei ein erster Aderteil der Ader um ein erstes Spulenteil und ein zweiter Aderteil der Ader um ein zweites Spulenteil gewickelt ist. Der erste Teil der Ader ist so angeordnet, daß er sich von dem ersten Spulenteil erstreckt (davon abläuft), um eine Position des ersten Verbindermittels bezüglich des Gehäuses zu ändern.

Die Schalttafel der Erfindung liefert bedeutende Vorteile. Der Aufbau mit der sich von dem ersten Verbindungsmittel zum zweiten Verbindungsmittel erstreckenden einzigen, nicht unterbrochenen einstückigen Ader liefert eine ausgezeichnete Leistung. Die Verbindung gestattet eine hochratige Übertragung über die von der Schalttafel (zwischen dem ersten Verbindungsmittel und dem zweiten Verbindungsmittel) festgelegte Länge. Das erste Verbindungsmittel kann von der Schalttafel weg und zu ihr zurückbewegt werden, ohne Aufbewahrungsprobleme hinsichtlich des Aderstücks, das in der Schalttafel verbleibt, und ohne eine bewegliche Verbindung wie beispielsweise eine elektrische Verbindung auf der Grundlage von zwei sich bewegenden Teilen oder Schleifringen. Dies wird durch die neuartige Aufbewahrung des zweiten Aderteils in dem zweiten Spulenteil oder in einem Spulenaufbewahrungsbereich erzielt. Das Herausziehen des ersten Aderteils und das Einziehen des ersten Aderteils geschieht ohne signifikantes physisches Verdrehen oder Beschädigen der Ader, wodurch die Integrität der elektrischen Verbindungsstrecke sichergestellt und die Kapazität für hochratige (hochfrequente) Übertragung geliefert wird.

Vorzugsweise ist ein Kassettenbehälter vorgesehen, der die Spule trägt. Der Kassettenbehälter ist innerhalb des Gehäuses positioniert und kann aus dem Gehäuse entfernt werden, um Zugang zu der Spule und der Ader zu haben. Dadurch kann der Benutzer die Ader wechseln, wenn die Ader nicht die richtige Leistung liefert. Die Kassette enthält vorzugsweise eine darin angebrachte zusätzliche Spule. Die zweite Spule weist ein zusätzliches erstes Verbindungsmittel, ein zusätzliches zweites Verbindungsmittel und ein zusätzliches, mit dem ersten Verbindungsmittel und dem zweiten Verbindungsmittel verbundenes elektrisches Zusammenschaltungsmittel auf. In dem Gehäuse sind vorzugsweise mehrere Kassetten angeordnet.

Die Spule ist vorzugsweise mit einem Federmittel zum Ausüben einer Federkraft auf die Spule zum Aufrechterhalten des ersten Aderstücks in einem eingezogenen Zustand verbunden. Zum Festlegen einer Drehposition der Spule ist vorzugsweise ein Klinkensperrmittel vorgesehen.

Der zweite Aderteil ist vorzugsweise ungefähr halb so lang wie der erste Aderteil. Die elektrisch leitfähige Ader ist eine einstückige, nicht unterbrochene Ader, wobei ein Übergang zwischen dem ersten Aderteil und dem zweiten Aderteil vorzugsweise dort auftritt, wo die Ader durch eine Mitte der Spule tritt. Beim Ablaufen des ersten Aderteils bleibt der zweite Aderteil in dem zweiten Spulenteil. Dieses zweite Spulenteil bildet den Aufbewahrungsbereich.

Durch Anordnen des zweiten Aderteils in dem Spulenaufbewahrungsraum, in der gleichen Richtung wie die Wicklung des ersten Aderteils, wickelt sich der zweite Aderteil innerhalb des Aufbewahrungsraums in einer ersten Drehrichtung ab und beginnt danach mit dem Wiederaufwickeln in einer zweiten Drehrichtung, während der erste Aderteil über die Hälfte seines vollen Auszugs hinaus in Richtung des vollen Auszugs bewegt wird. Durch diese Anordnung kann der zweite Aderteil etwa halb so lang wie der erste Aderteil sein, so daß weniger Ader aufbewahrt wird, als aus der Schalttafel abläuft. Die Orientierung und das Vorsehen des zweiten Aderteils derart, daß er sich auf eine Weise abwickelt, daß er sich nach außen in Richtung eines Umfangs des Spulenaufbewahrungsraums erstreckt, bevor er sich im Kern des Spulenaufbewahrungsraums in einer seiner ursprünglichen Wickelrichtung entgegengesetzten Richtung aufwickelt, liefert einen geordneten Übergang von einer ersten Wickelrichtung zu einer zweiten Wickelrichtung, was für ein glattes Ablaufen des ersten Aderteils ohne Probleme bezüglich des zweiten Aderteils sorgt. Das heißt, es gibt kein Problem mit demjenigen Teil der Ader, der sich von dem ersten Aderteil zu dem vorzugsweise festgelegten zweiten Verbindungsmittel erstreckt.

Die Erfindung wird nachfolgend anhand eines bevorzugten Ausführungsbeispiels näher erläutert. Die Fig. zeigen:
- Figur 1: eine schematische Ansicht der Schalttafel der Erfindung mit verschiedenen angeschlossenen Vorrichtungen;
- Figur 2: eine perspektivische Ansicht der Schalttafel gemäß der Erfindung mit dem Gehäuse und verschiedenen herausziehbaren Kabelkassetten;
- Figur 3: eine perspektivische Ansicht einer herausziehbaren Kabelkassette;
- Figur 4: eine perspektivische, auseinandergezogene Ansicht einer herausziehbaren Kabelkassette;
- Figur 5: eine perspektivische, auseinandergezogene Ansicht einer Spule mit Spulenhälften und einem Federmotor;
- Figur 6: eine schematische Querschnittsansicht einer Kassette gemäß der Erfindung;
- Figur 7: eine Seitenansicht einer Kassette mit der Aufbewahrungsspulenhälfte mit der herausziehbaren Ader in einer vollständig herausgezogenen Position;
- Figur 8: eine Seitenansicht einer Kassette mit dem aufbewahrten Aderteil, wobei der herausziehbare Aderteil beinahe 50% seiner vollen Auszugslänge herausgezogen ist, wobei der aufbewahrte Teil der Ader beginnt, sich vor dem eigentlichen Aufwickeln in einer seiner ursprünglichen Wicklungsrichtung entgegengesetzten Richtung nach außen in Richtung der Peripherie des Spulenaufbewahrungsplatzes zu erstrecken; und
- Figur 9: eine Seitenansicht einer Kassette mit dem Aufbewahrungsaderteil in einer Position, nachdem die Ader um eine erste Strecke aus der Schalttafel herausgezogen worden ist.

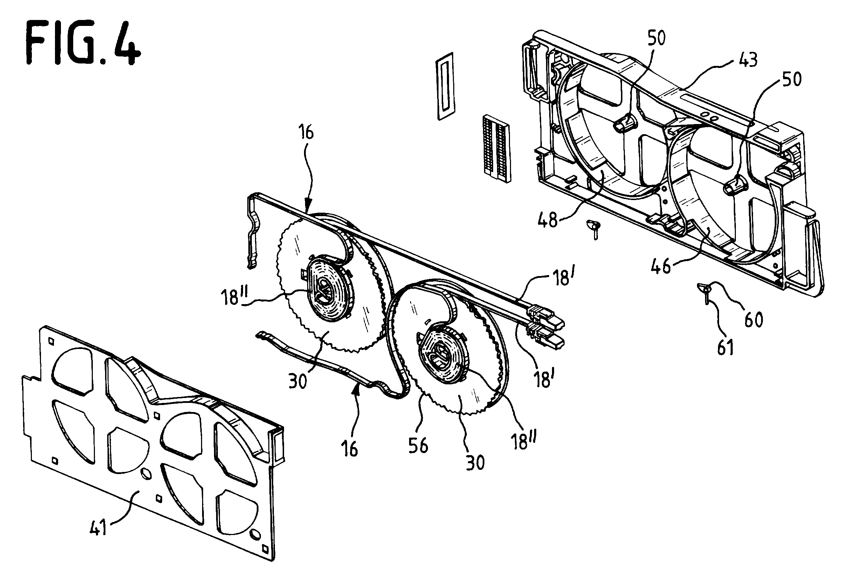

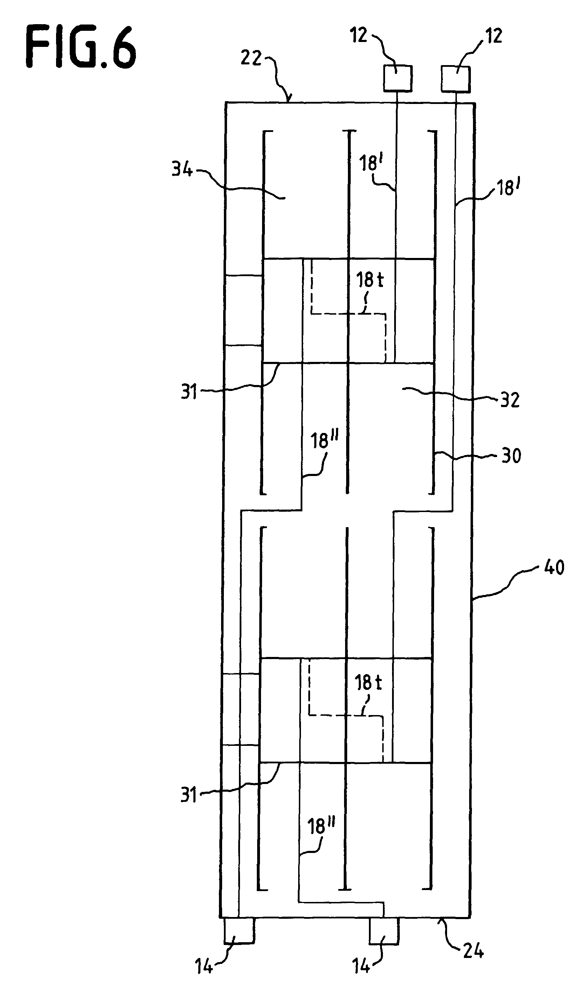

Unter besonderer Bezugnahme auf die Zeichnungen umfaßt die Erfindung eine allgemein mit 8 bezeichnete Schalttafel. Die Schalttafel enthält ein Gehäuse 10 und mehrere erste elektrische Verbinder 12 und mehrere zweite elektrische Verbinder 14 (siehe Figur 6). Die Schalttafel 8 enthält weiterhin ein physisches und elektrisches Zusammenschaltungsmittel 16. Das Zusammenschaltungsmittel 16 liefert eine Verbindungsleitung bzw. Verbindungsstrecke zwischen jedem ersten elektrischen Verbinder 12 und jedem zweiten elektrischen Verbinde 14. Das Zusammenschaltungsmittel 16 ist aus einer kontinuierlichen, nicht unterbrochenen Ader 18 gebildet. Die Ader 18 enthält vorzugsweise eine aus mindestens einem einstückigen kontinuierlichen Aderstrang gebildete Ader. Die Ader 18 enthält einen herausziehbaren Aderteil 18' und einen aufbewahrten Aderteil 18'' (siehe Figur 4).

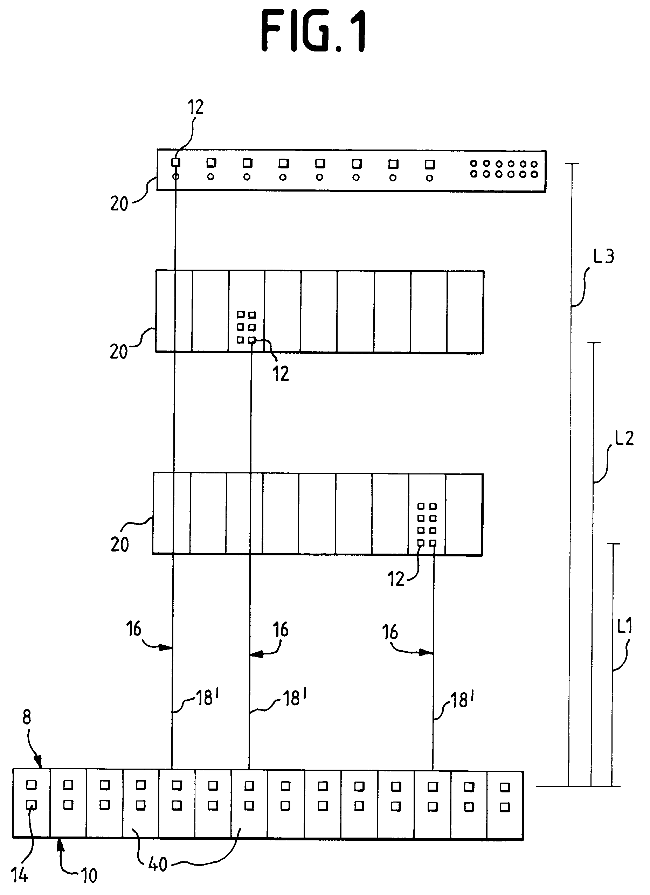

Die Schalttafel 8 der Erfindung kann in einer Situation verwendet werden, wie sie in Figur 1 gezeigt ist. Mehrere Datenzentren 20 können vorgesehen sein. Eine Entfernung (L1, L2, L3 usw.) zwischen der Schalttafel und den zu verbindenden Vorrichtungen wie beispielsweise den Datenzentren 20 ist für jede Vorrichtung verschieden.

Wenn es notwendig ist, die Verbindungen zwischen der Schalttafel 8 und den Datenzentren 20 umzuordnen, kann der Aderteil 18' wie erforderlich herausgezogen werden. Es werden keine verschiedenen Steckerschnurlängen benötigt, um die verschiedenen Verbindungen herzustellen. Die Erfindung liefert ein einziehbares elektrisches Zusammenschaltungsmittel, nämlich das elektrische Zusammenschaltungsmittel 16 zwischen dem ersten elektrischen Verbinder 12 und einem zweiten elektrischen Verbinder 14. Bei diesem Aufbau sind überhaupt keine Steckerschnüre erforderlich. Die elektrische Verbindung zwischen dem ersten elektrischen Verbinder 12 und dem zweiten elektrischen Verbinder 14 erfolgt über eine herausziehbare/einziehbare Schnur, nämlich den herausziehbaren Aderteil 18' der nicht unterbrochenen Ader 18.

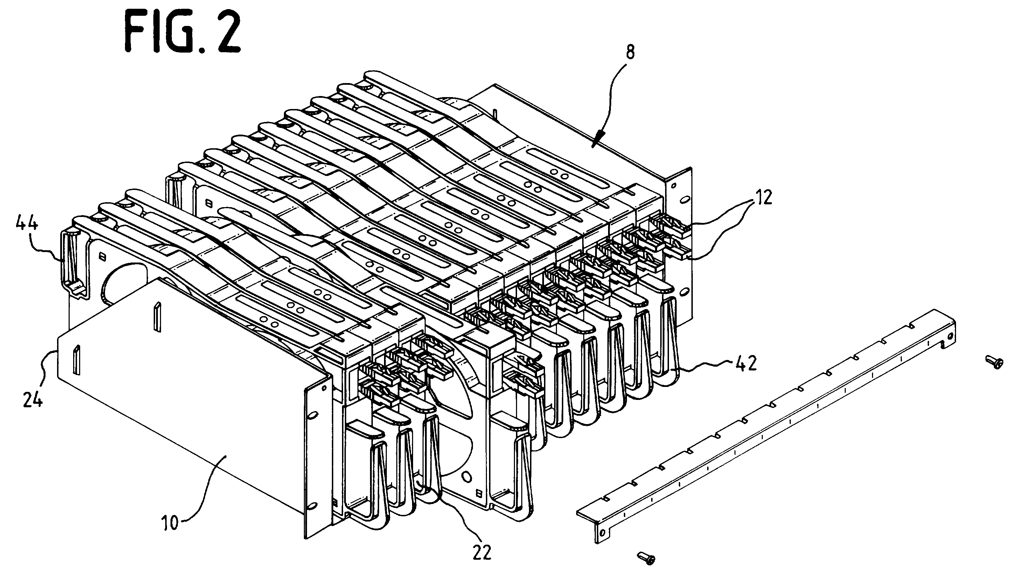

Figur 2 ist eine Darstellung der Schalttafel 8 mit einem allgemein mit 10 bezeichneten Gehäuse. Die Schalttafel 8 enthält eine Vorderseite 22 mit einer Mehrzahl der ersten elektrischen Verbinder 12. Außerdem enthält die Schalttafel 8 eine Rückseite 24. Die Rückseite 24 weist ebenfalls eine Mehrzahl der elektrischen Verbinder auf, nämlich die zweiten elektrischen Verbinder 14 (siehe Figur 6). Das Gehäuse 10 trägt Kassetten bzw. Kabelkassetten 40. Jede Kassette 40 weist zwei erste elektrische Verbinder 12 und zwei zweite elektrische Verbinder 14 auf.

Die Erfindung liefert mehrere Kassetten 40, die jeweils zwei Spulen 30 tragen. Jede Kassette 40 enthält vorzugsweise ein Aderführungselement 42 auf einer Vorderseite 22 und ein Aderführungselement 44 auf der Rückseite 24. Die Kassette 40 ist so geschaffen, daß sie aus dem Mantel des Gehäuses 10 herausgezogen werden kann, wie in Figur 2 gezeigt. Bei einem Problem mit irgendeiner der Leitungen wird eine Kassette 40 aus dem Mantel des Gehäuses 10 entfernt, was das Entfernen der Spule 30 aus der Kassette gestattet. Die Ader 18 auf der Spule 30 kann ersetzt werden, oder eine neue Spule 30 mit einer Ader 18 kann wieder in der Kassette angeordnet werden, wobei der erste Kontakt 12 und der zweite Kontakt 14 an der Vorderseite 22 bzw. der Rückseite 24 angeordnet sind. Diese Anordnung sorgt für einen praktischen Mechanismus zum Ersetzen von Leitungen, die nicht funktionieren oder nicht die erforderliche Leistung erreichen.

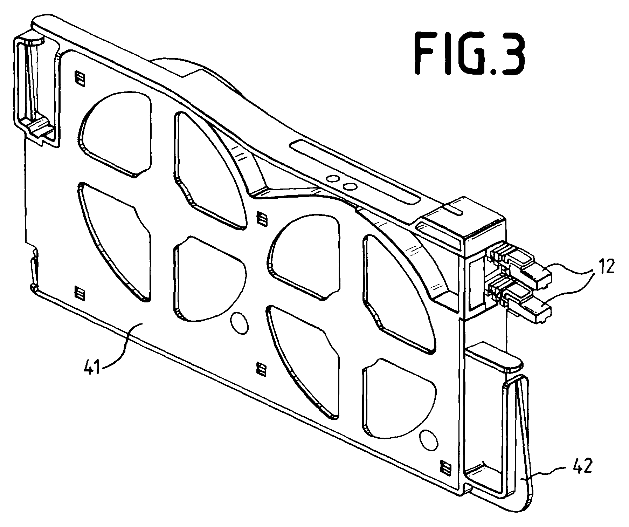

Figur 3 zeigt die aus dem Gehäuse 10 entfernte Kassette 40. Eine Vorderplatte 41 bedeckt die Spulen 30.

Wie in Figur 4 ersichtlich, enthält jede Kassette 40 eine Tragstruktur 43 mit einem vorderen Spulenaufnahmebereich 46 sowie einem hinteren Spulenaufnahmebereich 48. Die beiden ersten elektrischen Verbinder 12, die beiden zweiten elektrischen Verbinder 14 und die zugeordneten Adern 18 sind bei jeder Kassette 40 vorgesehen. Diese Anordnung sorgt für eine Verbinderdichte, die standardmäßigen Schalttafeln ähnlich ist, nämlich Reihen aus zwei Verbindern.

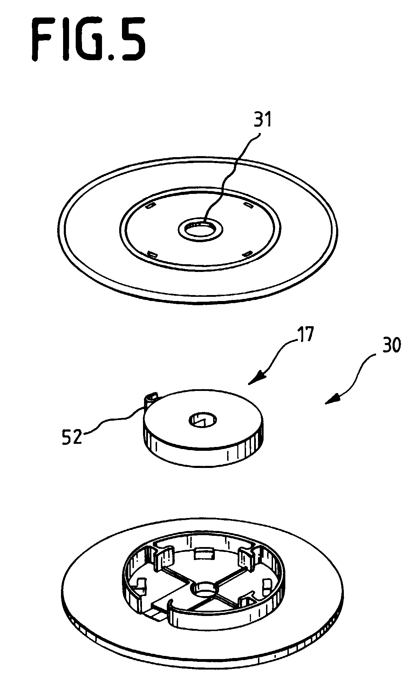

Jede Spule 30 ist mit der Kassette 40 verbunden, wobei eine Innenfläche ihres Kerns 31 von einem Lageelement 50 getragen wird. Das Lageelement 50 ist vorzugsweise lediglich ein zylindrisches Element zum Tragen der Spule 30 bei der Drehung. Außerdem ist ein Federmittel 17 (siehe Figur 5) in Form eines Federmotors 52 zum Unterstützen des Einziehens des Aderteils 18', nachdem er herausgezogen worden ist, vorgesehen. Die Feder 52 sorgt für eine drehungsmäßige Vorspannung, wodurch beim Ablaufen des Aderteils 18' auf die Ader eine Kraft zum Einziehen der Ader ausgeübt wird. Um zu vermeiden, daß die Ader zu viel Belastung ausgesetzt wird, ist ein Klinkensperrmittel 53 vorgesehen, das sowohl dem vorderen Spulenaufnahmebereich 46 als auch dem hinteren Spulenaufnahmebereich 48 zugeordnet ist. Jedes Klinkensperrmittel enthält Zähne 56, die an jeder Spule 30 vorgesehen sind, und ein mit einer Feder 61 verbundenes Sperrklinkenelement 60. Das Sperrklinkenelement 60 kann in Eingriff mit den Zahnradzähnen eines Getriebes bzw. Zahnradzähnen 56 gebracht werden, wodurch die Spule 30 in Position gehalten und auch die drehungsmäßig vorspannende Kraft beseitigt wird, die ansonsten auf die Ader 18 ausgeübt werden würde.

Das elektrische Zusammenschaltungsmittel 16 gemäß der Erfindung basiert auf einer einzelnen kontinuierlichen Leitung (Ader) 18, die von dem ersten elektrischen Verbinder 12 zu dem zweiten elektrischen Verbinder 14 verläuft. Dieses Zusammenschaltungsmittel 16 ist in Form einer Ader 18 vorgesehen, die in der Schalttafel 8 bis zu ihrem Gebrauch aufbewahrt wird. Bei Verwendung erstreckt sich der Aderteil 18' aus der Schalttafel.

Die Spulen 30 geben den Verbindungsaderteil 18' aus und bewahren den Verbindungsaderteil 18'' auf. Der Verbindungsaderteil 18' kann zurückgezogen werden, um ihn zur Aufbewahrung zu positionieren. Ein Zuführ- und Aufbewahrungsmittel wird aus der Spule, die allgemein mit 30 bezeichnet ist, einem Federmittel 17 und dem Klinkensperrmittel (einschließlich Sperrklinkenelement 60, Zähnen 56 und Feder 61) gebildet. Wie aus Figur 6 ersichtlich, enthält jede Spule 30 eine Ausgabespulenhälfte 32 und eine Aufbewahrungsspulenhälfte 34. Die Ausgabespulenhälfte 32 liefert den Raum zum Aufbewahren des auszugebenden herausziehbaren Aderteils 18' in dem zum Anschließen des ersten Verbindungsmittels 12 erforderlichen Maß. Die andere Hälfte der Ader 18, der aufbewahrte Teil 18'', ist im Aufbewahrungsbereich 34 angeordnet. Dieser aufbewahrte Teil 18'' im Aufbewahrungsbereich 34 ist etwa halb so lang wie der herausziehbare Teil 18' (die Hälfte der maximalen Menge an Ader 18, die aus der Steckerschnur 10 herausgezogen werden kann). Da die Ader 18 eine einzelne, kontinuierliche einstückige Ader ist, die sich von dem ersten Verbinder 12 zu dem zweiten Verbinder 14 erstreckt, gibt es zwischen den Aderteilen 18' und 18'' im Kern 31 der Spule 30 einen Übergangsteil 18t. Weiterhin ist die Länge der Ader von dem Verbinder 14 zu dem Spulenaufbewahrungsraum 34 vorzugsweise konstant (verändert sich nicht). Dies bildet gemäß der Erfindung einen signifikanten Vorteil, daß von dem ersten Verbinder 12 zu dem zweiten Verbinder 14 eine einzelne nichtunterbrochene elektrische Leitung vorgesehen ist. Dies verbessert die Leistung der Vorrichtung wesentlich und beseitigt Probleme hinsichtlich der Übertragung eines elektrischen Signals zwischen sich bewegenden Teilen. Dies führt allerdings zu dem signifikanten Erfordernis, daß die maximale Ausgabelänge an herausziehbarer Ader 18' durch die Aufbewahrung des übrigen Teils der Ader 18 beschränkt wird.

Der Verbinder 14 ist direkt mit der Ader 18 verbunden, die in den Aufbewahrungsraum 34 zugeführt wird und in den Ausgabebereich 32 hinüberläuft. Diese Entfernung zwischen dem Überführungspunkt und der Stelle, an der die Ader 18t aus der Spule 30 austritt, entspricht im wesentlichen der Entfernung zwischen dem Überführungspunkt und dem ersten Verbindungselement 12. Die gleiche Beziehung ist bezüglich der hinteren Spule 30 und des ihr zugeordneten vorderen ersten verbindenden Elements 12, hinteren ersten verbindenden Elements 14 und der ihr zugeordneten Zusammenschaltungsader 18 vorgesehen.

Die Erfindung liefert eine unitäre bzw. einzelne Ader, die das erste Aderverbindungselement und das zweite Aderverbindungselement verbindet. Um eine einzelne nichtunterbrochene kontinuierliche Ader 18 zu verwenden, um für das Aderzusammenschaltungsmittel 16 zu sorgen, muß auf der Spule im Aufbewahrungsraum 34 eine Menge an Ader 18'' gespeichert sein, die geringer als die oder gleich der Menge an auf der Spule in dem Ausgaberaum 32 aufbewahrter Ader ist, wenn die Ader vollständig eingezogen ist. Durch Einsatz einer gleichen Länge für die Aufbewahrung könnte die Leistung der Schalttafel reduziert werden. Dies könnte auch hinsichtlich der physischen Aufbewahrung desjenigen Teils der Ader 18 problematisch sein, der jederzeit vollständig innerhalb der Schalttafel bleibt.

Gemäß der Erfindung wird für den aufbewahrten Teil der Ader 18'' eine Bewicklungstechnik verwendet. Dies gestattet, verglichen mit der Ausgabeseite 32, lediglich etwa die Hälfte der Ader auf der Aufbewahrungsraumseite 34 zu verwenden. Die Ader 18', die aus dem Ausgaberaum 32 ausgegeben wird, ist etwa doppelt so lang wie die Ader 18'', die innerhalb des Aufbewahrungsraums 34 verwendet werden soll.

Wenn die Ader 18 etwa zur Hälfte ihrer maximalen Länge herausgezogen ist, ist in einer ersten Drehrichtung eine volle Menge an aufbewahrter Ader 18'' im Raum 34 abgewickelt worden. Wenn die Ader 18 weiter aus der Schalttafel herausgezogen wird, erfährt der aufbewahrte Teil der Ader 18 eine Umkehrung vom Abwickeln in eine Richtung im (beispielsweise) Uhrzeigersinn zum Aufwickeln in eine Richtung entgegen dem Uhrzeigersinn.

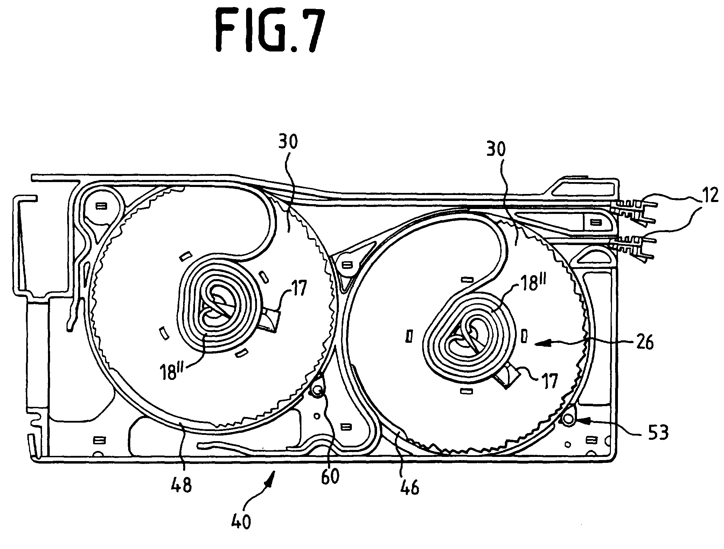

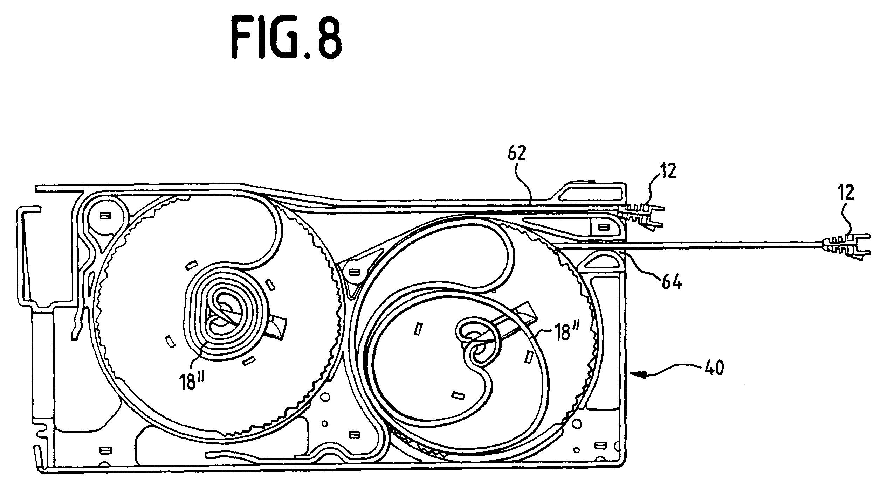

Figur 7 zeigt den Zustand des aufbewahrten Aderteils 18'' und den Spulenaufbewahrungsraum 34, wenn sich der herausziehbare Teil des Aderteils 18' in einer eingezogenen Position befindet. Wie zu sehen ist, ist der aufbewahrte Aderteil 18'' vollständig aufgewickelt. Eine Drehung im Uhrzeigersinn und ein Herausziehen des Aderteils 18' aus dem Ausgabebereich 32 führt dazu, daß der aufbewahrte Aderteil 18'' abgewickelt wird, wie in Figur 8 gezeigt. Die Entfernung zwischen dem zweiten Aderverbindungselement 14 und der Peripherie der Spule ist festgelegt, so daß der aufbewahrte Aderteil 18'' sich im Raum 34 abwickelt, aber im Raum 34 gehalten wird. In Figur 8 ist die Ader 18' zu fast 50% aus dem Ausgabebereich 32 herausgezogen. Der Aderteil 18'' im Aufbewahrungsraum 34 ist beinahe vollständig abgewickelt.

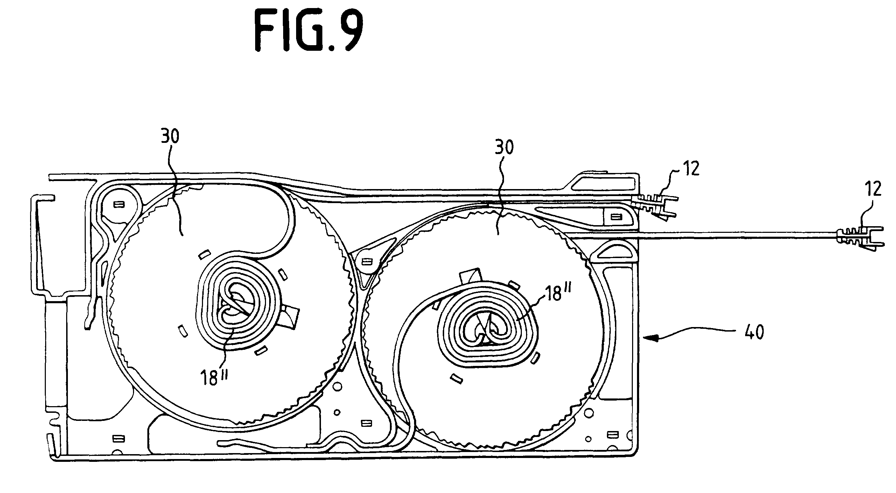

Figur 9 zeigt den herausziehbaren Aderteil 18' vollständig aus dem Ausgaberaum 32 herausgezogen. In dieser vollständig herausgezogenen Position ist der aufbewahrte Aderteil 18'' im Aufbewahrungsraum 34 vollständig um den Spulenkern 31 (die Spulenmitte) des Aufbewahrungsraums 34 in einer zweiten Drehrichtung aufgewickelt. An dieser Stelle kann der herausziehbare Aderteil 18' nicht weiter aus dem Ausgaberaum 32 herausgezogen werden.

Das Klinkensperrmittel 53 gestattet, daß die Ader 18 bis zu einer beliebigen Entfernung zwischen der größten Auszugslänge und der kleinsten

Auszugslänge herausgezogen und dann in dieser Position gehalten wird. Dies ist zweckmäßig, da die Federkraft des Federmittels 17 nicht mehr auf die Spule ausgeübt wird, wenn das Sperrklinkenelement 60 mit den Zähnen 56 im Eingriff steht und deshalb die Ader 18 durch die Kraft des Federmotors 52 nicht länger belastet wird. Dies ist insofern auch eine praktische Anordnung, als daß der Techniker, der unter Verwendung der Schalttafel der Erfindung neuverdrahtet oder verdrahtet, die Ader bis zu der erforderlichen Länge herausziehen kann, ohne daß die Ader in die eingezogene Position zurückschnellt.

Wenn die Ader 18' aus ihrer vollständig herausgezogenen Position in ihre eingezogene Position zurückkehrt, wickelt sich der in dem Aufbewahrungsraum 34 (in Figur 9 gezeigt) befindliche Teil der Ader ab, während die Spulen sich entgegen dem Uhrzeigersinn drehen. Das Abwickeln bewirkt wieder, daß die Ader soweit nach außen in Richtung der Peripherie des Aufbewahrungsraums 34 gedrückt wird, bis die Ader um mehr als etwa 50% ihres herausgezogenen Zustands eingezogen ist. An diesem Punkt beginnt die Ader sich wiederaufzuwickeln, wenn sich die Spule weiterhin entgegen dem Uhrzeigersinn dreht. Dies führt schließlich zu einer Rückkehr in den in Figur 7 gezeigten Zustand.

Spezifische Ausführungsformen der Erfindung sind zwar ausführlich gezeigt und beschrieben worden, um die Anwendung der Grundlagen der Erfindung zu veranschaulichen, doch versteht es sich, daß die Erfindung auf andere Weise verkörpert werden kann, ohne von diesen Grundlagen abzuweichen.

### Bezugszeichenliste:

- 8): Schalttafel
- 10): Schalttafelgehäuse
- 12): erstes elektrisches Verbindungsmittel
- 14): zweites elektrisches Verbindungsmtitel
- 16): Zusammenschaltungsmittel
- 17): Federmittel
- 18): Ader
- 18'): herausziehbarer Aderteil
- 18''): aufbewahrter Aderteil
- 18t): Übergangsteil
- 20): Datenzentren
- 22): Vorderseite
- 24): Rückseite
- 30): Spule
- 31): Kern
- 32): Ausgabenspulenhälfte
- 34): Aufbewahrungsspulenhälfte
- 40): Kassette
- 41): Vorderplatte
- 42): Aderführungselement
- 43): Tragstruktur
- 44): Aderführungselement
- 46): vorderer Spulenaufnahmebereich
- 48): hinterer Spulenaufnahmebereich
- 50): Lageelement
- 52): Federmotor
- 53): Klinkersperrmittel
- 56): Zähne
- 60): Sperrklinkenelement
- 61): Feder

## Patentansprüche

1. Schalttafel, umfassend ein Schalttafelgehäuse, mindestens ein erstes und zweites elektrisches Verbindungsmittel, die mittels eines elektrischen Zusammenhaltungsmittels miteinander elektrisch verbunden sind,
**dadurch gekennzeichnet, daß**
das Zusammenschaltungsmittel (16) derart ausgebildet ist, daß das erste elektrische Verbindungsmittel (12) zu dem Schalttafelgehäuse (10) hin- und wegbewegbar ist.

2. Schalttafel nach Anspruch 1, dadurch gekennzeichnet, daß das elektrische Zusammenschaltungsmittel (16) eine elektrisch leitfähige Ader (18), die sich zwischen den ersten und zweiten Verbindungsmitteln (12,14) erstreckt und mindestens eine Spule (30) umfaßt, wobei der Spule (30) je eine Ausgabenspulenhälfte (32) und eine Aufbewahrungsspulenhälfte (34) zugeordnet sind, wobei der der Ausgabenspulenhälfte (32) zugeordnete Verbindungsadernteil (18') aus der Schalttafel (8) herausziehbar ist.

3. Schalttafel nach Anspruch 2, dadurch gekennzeichnet, daß mindestens eine Spule (30) in einer Kassette angeordnet ist.

4. Schalttafel nach Anspruch 2 oder 3, dadurch gekennzeichnet, daß jeder Spule (30) ein Federmittel (17) zugeordnet ist, mittels dessen der herausziehbare Adernteil (18') unter Vorspannung haltbar ist.

5. Schalttafel nach einem der Ansprüche 2 bis 4, dadurch gekennzeichnet, daß der Spule (30) ein Klinkensperrmittel (53) zugeordnet ist, umfassend Zähne (56) und ein mit einer Feder (61) verbundenes Sperrklinkenelement (60).

6. Schalttafel nach einem der Ansprüche 2 bis 5, dadurch gekennzeichnet, daß die Länge des der Ausgabenspulenhälfte (32) zugeordneten Adernteils (18') doppelt so groß wie der der Aufbewahrungsspulenhälfte (34) zugeordnete Adernteil (18'') ist.

7. Schalttafel nach einem der Ansprüche 3 bis 6, dadurch gekennzeichnet, daß die Schalttafel (8) aus mehreren Kassetten (40) gebildet ist.

8. Schalttafel nach einem der Ansprüche 2 bis 7, dadurch gekennzeichnet, daß das Adernteil (18'') der Aufbewahrungsspulenhälfte (34) in der gleichen Richtung wie der Adernteil (18') in der Ausgabenspulenhälfte (32) aufgewickelt ist.
